# EUROPEAN PATENT SPECIFICATION

(11) **EP 1 522 524 B1**
(45) Date of publication and mention of the grant of the patent: **22.08.2007**
(21) Application number: 04255739.7
(22) Date of filing: 21.09.2004
(51) Int. Cl.: C02F 1/28, C02F 1/44

(54) **Filtration unit, filtration unit installation method, and filtration apparatus**
Filtrationseinheit, Verfahren zu dessen Montage und Filtrationsapparat
Unité de filtration, méthode d' installation de l' unité de filtration, et dispositif de filtration

(30) Priority: 06.10.2003 JP 2003347466
(43) Date of publication of application: 13.04.2005
(73) Proprietor: Tsukishima Kikai Co. Ltd., Chuo-ku Tokyo (JP)
(72) Inventor: Nakayama, Tsuyoshi c/o Tsukishima Kikai Co., Ltd., Tokyo (JP)
(74) Representative: Turner, James Arthur

(56) References cited:
- US-A- 5 505 841
- US-A- 6 027 649

## Description

This invention relates to filtration units, filtration unit installation methods, and filtration apparatus (e.g. an apparatus in which a filtration unit is placed).

Filtration units may be, for example, installed in a water storage tank or in a water storage pond such as a precipitation pond of a water purification plant to perform filtration processing on raw water.

Examples of this type of filtration apparatus in which a filtration module formed by hollow fiber membranes is immersed in a tank into which raw water is introduced, and diffusion pipes that diffuse air in the tank are provided under this filtration module are disclosed in Japanese Unexamined Patent Application, First Publication Nos. H08-57273 (Patent Document 1), H09-24250 (Patent Document 2), H10-323683 (Patent Document 3), and 2003-94056 (Patent Document 4) as well as in Japanese Patent No. 3440402 (Patent Document 5). Further relevant prior art is US-A-6 027 649 which discloses a water purifying system that provides drinkable water. In the filtration apparatuses described in these Patent Documents (1 to 5), by adding activated carbon to raw water that has been introduced into the tank, or by immersing the activated carbon in the tank or incorporating activated carbon in the tank, organic material present in the raw water is absorbed by the activated carbon, thereby achieving an improvement in the filtration efficiency. The activated carbon that absorbs organic material in the raw water in this manner settles on the bottom of the tank and is discharged together with the raw water in the tank.

However, in the filtration apparatus disclosed in Patent Document 2, activated carbon is added to the raw water itself that has been introduced into the tank (i.e., into a container), while in the filtration apparatus disclosed in Patent Document 5, activated carbon is immersed in the actual processing tank into which the raw water itself has been introduced. In both these filtration apparatuses, in order to obtain a satisfactory improvement in the filtration efficiency using the activated carbon relative to the quantity of raw water that has been introduced, it is necessary to add a large quantity of activated carbon, which results in costs becoming higher. Moreover, because a large quantity of contaminants and the like are contained in the raw water introduced into the tank, as is the case in Patent Document 2, in particular, the activated carbon that is taken out from the bottom portion of the container is still in a state of contamination from the contaminants, and the only solution is to process it in this state as waste material. In contrast, in the filtration apparatuses disclosed in the other Patent Documents 1, 3, and 4, raw water from which the contaminants have already been separated out to a certain extent using a precipitation tank or the like is introduced into another processing tank or the like, and filtration is performed using activated carbon and a filtration module. However, in this case, two tanks are required, and a large space is needed to set up the filtration apparatus.

Various respective aspects and features of the invention are defined in the appended claims.

The present invention was conceived in view of the above circumstances, and embodiments thereof aim to prevent a large space being taken up by the entire filtration apparatus including the aforementioned water storage tank and the like, and to keep costs low by a reduction in the quantity of activated carbon added as well as by the more efficient utilization thereof when raw water to which activated carbon has been added, as described above, is filtered using a filtration module formed by a hollow fiber membrane or the like.

A filtration unit according to an aspect of the present invention comprises a casing for immersion in a water storage tank or a water storage pond into which raw water is introduced, wherein the casing has a bottom and is shaped like a cylinder and the casing is provided with: an introduction aperture which introduces raw water from the water storage tank or the water storage pond into the casing; an activated carbon supply device that adds activated carbon into the introduced raw water; a stirring device that stirs raw water in the casing to which activated carbon has been added; a filtration module that filters the raw water; a reverse flow inhibiting device that inhibits the raw water inside the casing from flowing back into the introduction aperture and being discharged into the water storage tank or the water storage pond; and a discharge device that discharges raw water inside the casing; characterised in that introduction aperture is provided so as to be able to open at a water surface portion of the raw water in the water storage tank or the water storage pond when the casing is immersed, and a partition plate that restricts an inflow of the raw water of the water surface portion is provided at least at a periphery of the introduction aperture at an external circumference of the casing.

In the method of installing the filtration unit according to an aspect of the present invention, the above described type of filtration unit is installed in a water storage tank or the like. In the filtration apparatus of the present invention, the above described type of filtration unit is installed in a water storage tank or the like.

In this way, the filtration unit according to an aspect of the present invention is installed by the casing thereof being immersed in a water storage tank or the like into which raw water is introduced. The raw water inside the water storage tank or the like is introduced into the casing through an introduction aperture provided in the casing, and activated carbon is added thereto by the activated carbon supply device. The raw water inside the casing is then filtered by the filtration module. Accordingly, the installation method of the present invention in which this filtration unit is installed in a water storage tank or the like and the filtration apparatus in which this filtration unit has been installed using this installation method require no space greater than that occupied by the water storage tank or the like itself in order to filter raw water. Moreover, because clear water from which sludge and the like has been removed to a certain extent by precipitation separation inside the water storage tank or the like is introduced into the casing and is filtered, only a small quantity of activated carbon needs to be added. In addition, because there is only a small quantity of sludge and the like that is discharged when the sludge and the like that has been separated out from the raw water by filtration and the raw water that remains inside the casing is discharged together with the added activated carbon by the discharge device after the filtration, it is possible to reuse recovered activated carbon, for example, by adding it to the raw water that is introduced into the water storage tank or the like. As a result, a reduction in filtration costs can be achieved.

In contrast to this, in a filtration unit in which a casing is immersed in a water storage tank or the like, and raw water inside the water storage tank or the like is introduced into the casing through an introduction aperture in the water storage tank, when raw water to which activated carbon has been added is stirred by the stirring device and is then filtered by the filtration module, if an attempt is made to perform a filtration operation using the filtration module with raw water continuously introduced via the introduction aperture, the stirred raw water containing the activated carbon flows back into the introduction aperture and ends up being discharged back via the introduction aperture into the water storage tank or the like outside the casing. As a result, there is a concern that any improvement in the filtration efficiency will be hampered, and that the cost reduction effect will be lost because activated carbon that is circulating together with the raw water will need to be replenished. Therefore, in the present invention, a reverse flow inhibiting device is provided that inhibits the raw water inside the casing from flowing back into the introduction aperture and being discharged into the water storage tank or the like. Accordingly, even if filtration operation is performed with raw water continuously introduced, activated carbon can be held satisfactorily inside the casing, and more definite improvements in filtration efficiency and cost reduction can be achieved.

Here, if, for example, the aforementioned diffusion pipe is used as the stirring device, because raw water that is above this inside the casing is stirred while raw water that is below this is hardly stirred at all, by using a downpipe that extends from the introduction aperture towards the bottom inside the casing as the reverse flow inhibiting device, and positioning a bottom end aperture portion of this downpipe below the stirring device, the reverse flow of raw water containing activated carbon that is in the casing through the bottom end aperture portion and back to the aperture portion can be reliably controlled. Moreover, raw water inside the storage tank or the like can be continuously introduced from the introduction aperture via this downpipe into the casing. In addition, if a diffusion device that diffuses air into the casing, as is the case with the aforementioned diffusion pipe, is used as the stirring device, it is possible to use this also as a cleaning device that cleans the filtration modules by air scrubbing, which is more efficient.

Furthermore, in a case in which the filtration module is provided with a membrane filtration water pipe that discharges filtered water that has been filtered from the raw water, the stirring device is provided with a fluid supply pipe to which fluid that stirs the raw water inside the casing is supplied, and the discharge device is provided with a discharge pipe that discharges the raw water, the structure and labor needed to pass these pipes through the casing is not required. In addition, it is desirable that at least one of the membrane filtration water pipe, the fluid supply pipe, and the discharge pipe, or all of these extend from a top portion of the casing into the casing in order to prevent the space between the casing and the inner wall portion of the water storage tank or the like, or the spacings between casings of adjacent filtration units when a plurality of filtration units are installed in a water storage tank from being larger than is required. Moreover, if the discharge device above is provided with a discharge pipe that is connected to a suction pump, it is desirable that this discharge pipe opens at a bottom portion inside the casing in order to reliably discharge raw water that remains inside the casing after filtration and after cleaning together with activated carbon that has adhered to organic material, filtered sludge, or accretions and the like that have been peeled off from the filtration modules by the cleaning.

It is also desirable that a control device that controls the circulation of raw water via the introduction aperture is provided at the introduction aperture that are provided in the casing. By closing off the introduction aperture during stirring or cleaning such that the circulation of raw water is prevented by this control device, it is possible to more reliably prevent raw water containing activated carbon from being discharged from the inside of the casings into the water storage tank or the like. In addition, if the introduction aperture is also closed off when raw water inside the casings is being discharged by the discharge device after filtration and after cleaning, then the raw water inside the casings that is to be discharged is not diluted by the inflow of raw water from the storage tank or the like and the quantity of water that is discharged can be reduced to a minimum. Moreover, for example, when hollow fiber membranes or the like of the filtration module is to be cleaned using a chemical solution, it is sufficient if the introduction aperture is closed by the control device and the raw water inside the casing is replaced with the chemical solution. It is not necessary to fill the entire water storage tank or the like where the immersion membrane has been placed with the chemical solution, as is the case conventionally when an immersion membrane is cleaned with chemical solution. Furthermore, because the filtration unit of the present invention is provided with filtration module inside the casing and the development of the filtration units into units is highly advanced, during this type of chemical cleaning, if the chemical solution inside the casing is replaced outside the water storage tank or the like by lifting the unit together with the casing out of the water storage tank or the like, it is possible to prevent the occurrence of accidents such as chemical solution spilling into the water storage tank or the like, and the filtration modules can be cleaned still installed inside the casing. As a result, there is no damage to the hollow fiber membranes as is the case when conventional filtration modules are removed individually, and the task is greatly simplified.

Furthermore, in cases when the introduction aperture is provided so as to be able open at the water surface portion of the raw water in the water storage tank or the like and introduce raw water, by providing a partition plate that restricts an inflow of the raw water of the water surface portion at least at a periphery of the introduction aperture at an external circumference of the casing, it is possible to prevent floating material such as dirt that is floating on the water surface portion of the raw water that is held in the water storage tank or the like from being introduced into the casing together with the raw water. Note that, provided that the casing is formed in a cylindrical shape and is provided with a bottom portion, as seen in plan view it may be shaped as an angular cylinder that forms a polygon shape, or it may be shaped as a circular cylinder or an elliptical cylinder that forms a circular shape or the like. However, the outer configuration of the aforementioned filtration modules is typically formed in a box shaped configuration such as a rectangular parallelepiped. Accordingly, in order to efficiently house such filtration module in a casing, it is desirable that, as seen in plan view, the casing is formed as a rectangular cylinder such as a quadrangle or square.

In the installation method according to an aspect of the present invention in which this filtration unit is installed in a water storage tank or the like, and in the filtration apparatus of the present invention in which this filtration unit has been installed in a water storage tank using this installation method, it is desirable that the filtration unit is installed at an opposite side of the water storage tank, as seen in plan view, from the side at which the raw water is introduced. Namely, by employing this type of structure, the clearer raw water that is obtained after sludge and the like has been precipitated out and removed at the side of the water storage tank where the raw water is introduced is introduced into the casing of the filtration unit and is filtered. As a result, it is possible to achieve a further reduction in the quantity of activated carbon that is added, and even more efficient filtration becomes possible.

The invention will now be described by way of example with reference to the accompanying drawings, throughout which like parts are referred to by like references, and in which:
FIG. 1 is a partial broken-out perspective view showing an embodiment of the filtration unit of the present invention.
FIG 2 is a still more broken-out view of the lower stage filtration module and down pipe lower portions shown in FIG. 1.
FIG 3 is a plan view of the filtration unit shown in FIG 1.
FIG 4 is a partial broken-out perspective view showing a variant example of the filtration module of the embodiment shown in FIG. 1.
FIG 5 is a side cross-sectional view showing an embodiment of the filtration unit of the present invention in which the filtration unit of the embodiment shown in FIG. 1 has been installed.
FIG 6 is a cross-sectional view showing the moment when raw water is introduced in a filtration method that uses the filtration unit shown in FIG. 1.
FIG. 7 is a cross-sectional view of when the unit is full of raw water in a filtration method that uses the filtration unit shown in FIG. 1.
FIG 8 is a cross-sectional view showing the moment when activated carbon is added in a filtration method that uses the filtration unit shown in FIG 1.
FIG 9 is a cross-sectional view showing the moment when raw water is stirred in a filtration method that uses the filtration unit shown in FIG 1.
FIG 10 is a cross-sectional view showing a filtration operation in a filtration method that uses the filtration unit shown in FIG. 1.
FIG 11 is a cross-sectional view showing a state in which activated carbon is absorbed by a surface of the filtration module during a filtration operation in a filtration method that uses the filtration unit shown in FIG. 1.
FIG 12 is a cross-sectional view showing the cleaning of a filtration module in a filtration method that uses the filtration unit shown in FIG. 1.
FIG 13 is a cross-sectional view showing the discharge of raw water after it has been cleaned in a filtration method that uses the filtration unit shown in FIG 1.
FIG 14 is a cross-sectional view showing the completion of the discharge of raw water after it has been cleaned in a filtration method that uses the filtration unit shown in FIG 1.

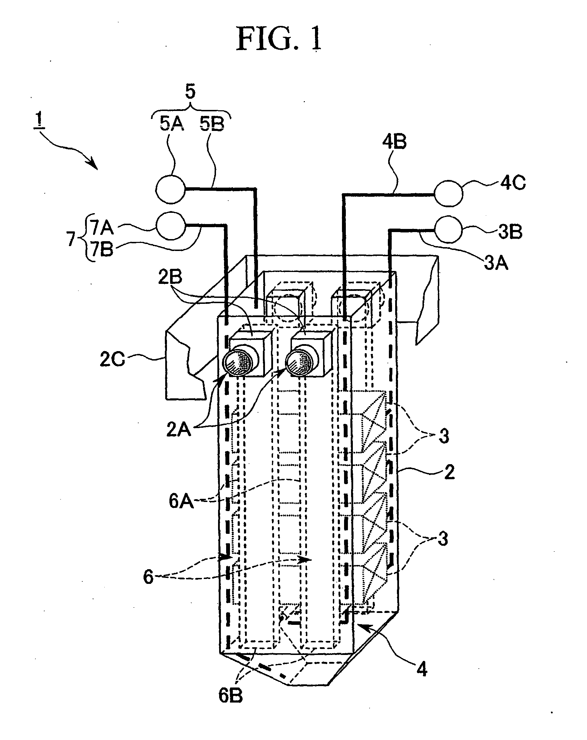

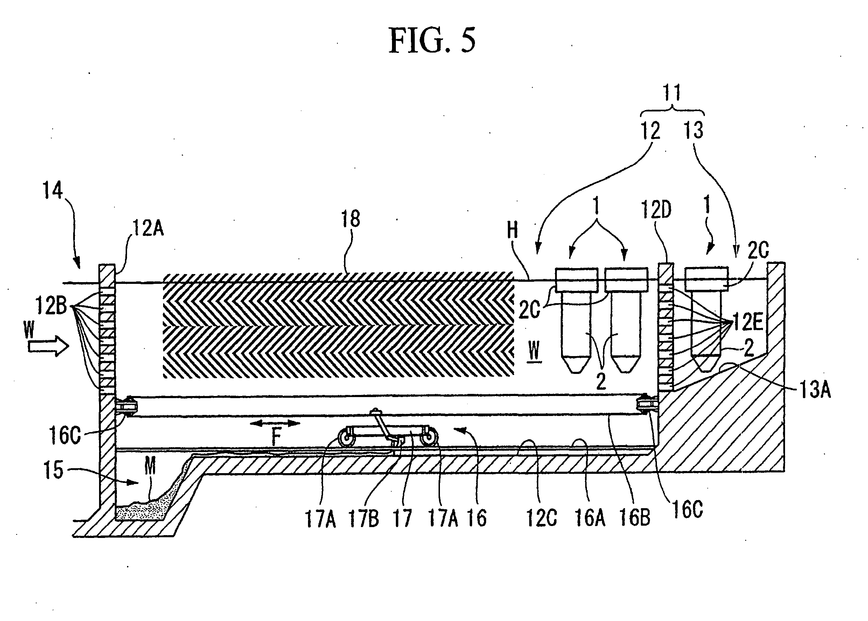

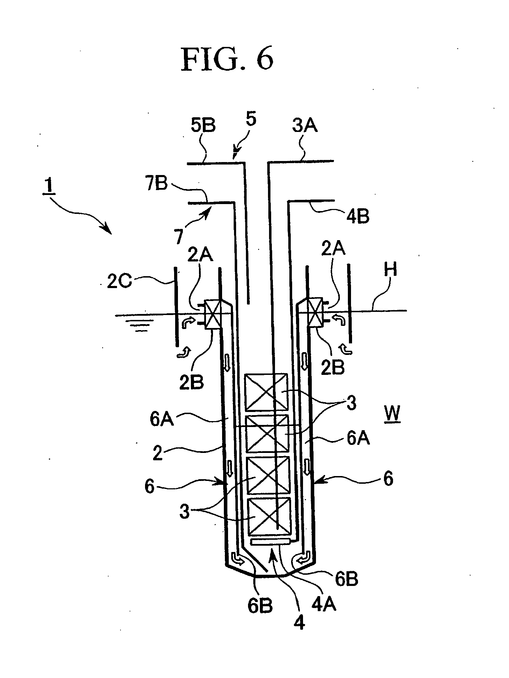

FIGS. 1 to 4 are views showing embodiments of the filtration unit of the present invention. FIG. 5 is a view showing an embodiment of the filtration apparatus of the present invention in which a filtration unit 1 of this embodiment has been installed in a water storage tank 11 such as a precipitation tank of a water purification plant or the like. FIGS. 6 to 14 are views showing the filtration method of raw water W using this type of filtration unit 1. The filtration unit 1 of the present embodiment is provided with introduction apertures 2A for introducing raw water W. Filtration modules 3 and a stirring device 4 are housed inside a casing 2 that is formed in a cylindrical shape having a closed off bottom. In addition, the filtration unit 1 is provided with an activated carbon supply device 5 that adds activated carbon C to the raw water W that has been introduced into the casing 2, a reverse flow inhibiting device 6 that inhibits the reverse flow of raw water W inside the casing 2 into the introduction apertures 2A, and a discharge device 7 that discharges raw water W from inside the casing 2.

Here, in the present embodiment, as seen in plan view, the casing 2 is formed in an elongated, rectangular shape from a highly corrosion resistant metal material such as stainless steel. The casing 2 is shaped as an oblong bottom-closed rectangular cylinder (namely, the bottom portion of the rectangular cylinder is closed) whose height is greater than the length of the long and short sides of the rectangle. The casing 2 is positioned such that this bottom portion faces downward and the height direction extends vertically upwards. Note that the bottom portion of the casing 2 is shaped substantially as a downwardly protruding truncated pyramid in which the four side surfaces of the casing 2 are formed by conical surfaces that are connected together, and in which a cross section of these four side surfaces becomes gradually smaller moving in a downward direction. However, the downwardly protruding substantially truncated pyramid shape of the present embodiment is provided in order to reduce the quantity of waste water residue and the shape of the bottom portion of the present embodiment is not limited to this.

The introduction apertures 2A are provided in a top portion of the casing 2. Control devices 2B that control the circulation of raw water W through the introduction apertures 2A are provided in these introduction apertures 2A. Here, in the present embodiment, the introduction apertures 2A are formed by internal circumferential portions of a plurality of pipe shaped members that protrude at intervals around the circumference of upper wall surfaces of the casing 2 and penetrate these wall surfaces. The control devices 2B are formed by opening and closing valves such as butterfly valves that are provided at base portions of the pipe shaped members. The opening and closing valves are driven by a driving device (not shown) so as to open the introduction apertures 2A. As a result, raw water W can be introduced into the casing 2 via the introduction apertures 2A. By shutting the introduction apertures 2A, the interior of the casing 2 becomes isolated from external raw water W, and the inflow of raw water W through the introduction apertures 2, as well as the discharge of raw water W from the casing 2 is prevented. Namely, the circulation of the raw water W is controlled. In addition, as is shown in FIGS. 6 to 14, the introduction apertures 2A are provided at a height that opens onto a water surface portion H of the raw water W that is held in the water storage tank 11, and can, accordingly, open onto the water surface portion H. However, the flow control method is not limited to this.

Furthermore, a partition plate 2C is provided at the outer circumference of the casing 2 so as to encircle the periphery of the introduction apertures 2A. This partition plate 2C is formed in a border wall configuration that has no gaps in the circumferential direction thereof, and is formed by four rectangular plates that are each parallel to upper wall surface portions of the casing 2 and that have a rectangular configuration, as seen in plan view, that is slightly larger than the above described rectangular configuration formed by the casing 2 as seen in plan view. The top and bottom of this partition plate 2C are open. As is shown in FIGS. 5 to 14, a gap is opened up between the partition plate 2C and the introduction apertures 2A, and the partition plate 2C is placed so as to be positioned at the height of the water surface portion H of the raw water W that is held in the water storage tank 11. Accordingly, the raw water W enters between the partition plate 2C and the casing 2 from below the partition plate 2C, and is introduced into the interior of the casing 2 from the introduction aperture 2A. As a result, dirt and the like that is floating on the water surface portion H can be prevented from being introduced in that state into the casing 2.

The filtration modules 3 housed in the casing 2 may be formed, for example, by laminating a plurality of elements obtained by placing hollow fiber membranes in a screen configuration or a plurality of elements having flat separation films, or by bundling a plurality of pipe shaped ceramic film elements, and then collecting them under a header (not shown) so as to form a module. In the present embodiment, each filtration module 3 has a rectangular parallelepiped configuration that is long from side to side. Moreover, in the present embodiment, a plurality (four in the drawing) of these modules 3 that are the same shape and the same size are placed such that a pair of side surfaces that each extend in the longitudinal direction are horizontal and the long sides of the side surfaces are parallel with the long sides of the rectangle formed by the casing 2 as seen in plan view. Moreover, filtration modules 3 are stacked vertically in a row such that these side surfaces of adjacent filtration modules 3 are made to face each other, and are then placed inside the casing 2.

The topmost filtration module 3 from among the plurality of filtration modules 3 that have been stacked in this manner is positioned below the introduction apertures 2A in the casing 2 as is shown in the drawing. In addition, it is also possible for vertically adjacent alteration modules 3 to be placed in close contact with each other or to be placed with a suitable gap in between. The aforementioned header of each filtration module 3 is connected to a suction pump 3B via membrane filtration water pipes, and filtrate water T that has been filtered from the raw water W by the filtration modules 3 is discharged through the membrane filtration water pipes 3A by the suction pump 3B.

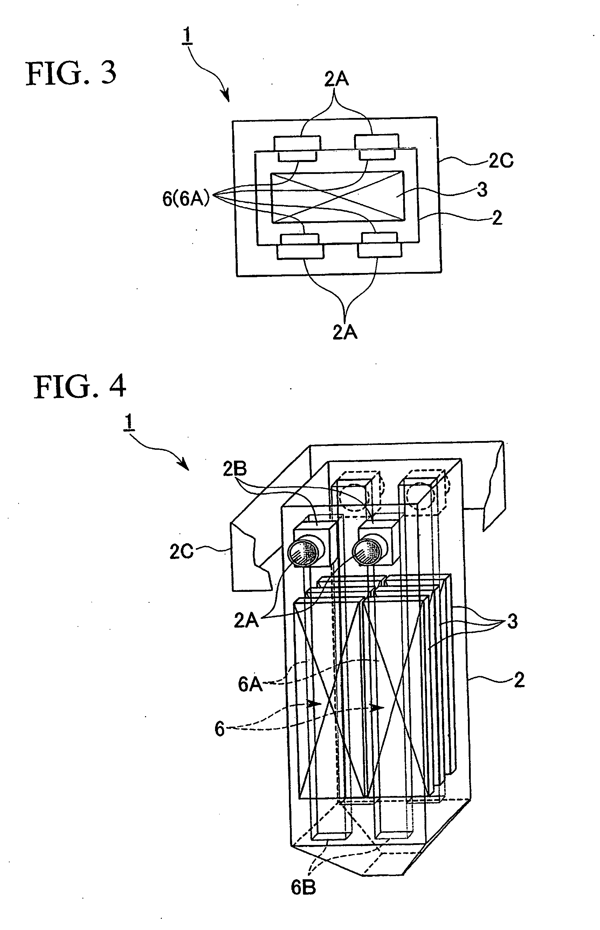

Note that, in the present embodiment, rectangular parallelepiped shaped filtration modules 3 are laid horizontally and are arranged in a row in a vertical direction, however, as is shown in FIG. 4, it is also possible to employ a structure in which, for example, planar shaped, flat membrane filtration modules 3 are each placed in a vertical alignment and arranged in a row horizontally, or for a plurality of such rows to be provided. Moreover, the modules may also be formed by bundling together hollow fibers in a vertical direction instead of using flat plates, and there are no limitations as to the type of module that is used.

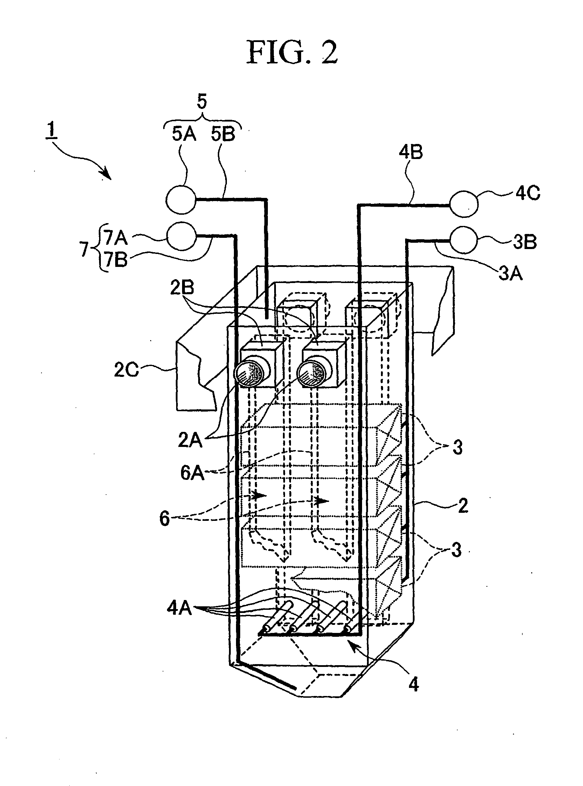

Furthermore, in the present embodiment, the stirring device 4 doubles as a cleaning device for the above described filtration modules 3. A device is used that stirs raw water W using fluid supplied to the casing 2, and that also cleans the filtration modules 3. In particular, in the present embodiment, a diffusion device that diffuses air A as a fluid for stirring and cleaning inside the casing 2 is used. Namely, as is shown in FIG. 2, this diffusion device (i.e., the stirring device 4 and the cleaning device) may be formed, for example, by connecting a diffusion apparatus 4A, which is formed by a plurality of pipes or sintered pipes that have a large number of downward facing air holes and that are placed below the filtration modules 3, to an air supply source 4C such as a blower via an air pipe 4B that serves as a stirring fluid supply pipe and a cleaning fluid supply pipe. Air A that is supplied from this air supply source 4C passes through the air pipe 4B and is discharged from air holes provided in the pipes of the diffusion apparatus 4A or from narrow pores formed in the sintered pipes. As a result, the raw water W that is held inside the casing 2 above the diffusion apparatus 4A is stirred. In addition, the filtration modules 3 that are positioned above the diffusion apparatus 4A are cleaned by undergoing air scrubbing from the diffused air.

Moreover, the activated carbon supply device 5 of the present embodiment adds activated carbon C to the raw water W inside the casing 2 by supplying a suspension solution, in which 2 to 5% of activated carbon C has been suspended, from a tank 5A to the interior of the casing 2 via a supply pipe 5B. As is shown in FIG. 6 to FIG. 14, a position where a bottom end of the supply pipe 5B opens onto a top portion of the interior of the casing 2 is below a top edge of the casing 2. Note that average particle diameter of the added activated carbon is desirably approximately 10 to 200 µm, and the addition quantity is desirably between 10 and 100 mg per liter of raw water W. Moreover, instead of supplying a suspension solution of activated carbon C, as is described above, activated carbon C itself can be added to the raw water W by being input from the top of the casing 2.

In addition, in the present embodiment, downpipes 6A that extend downwards towards the bottom from the introduction apertures 2A are provided inside the casing 2. Bottom end aperture portions 6B of these downpipes 6A are positioned below the diffusion apparatus 4A of the above described diffusion device, which serves as the stirring device 4 and the cleaning device, and the aforementioned reverse flow inhibiting device 6 is formed by the downpipes 6A that prevents raw water W that has been introduced into the casing 2 from flowing in reverse from the introduction apertures 2A and being discharged into the water storage tank 11. Here, the downpipes 6A are formed from angled bars, whose cross sections form a flattened U shape, that extend from the aperture portions of the introduction apertures 2A that are on the inner side of the casing 2 to a position directly above the bottom portion of the introduction apertures 2A, which is below the diffusion apparatus 4A. As is shown in FIG. 3, an aperture portion of each cross section is bonded onto an inner wall of the casing 2, thereby forming the downpipes 6A. As is shown in FIGS. 6 to 14, top end portions of the downpipes 6A are closed off such that the introduction apertures 2A are connected with the interiors of the downpipes 6A. Cross sections of the downpipes 6A of a water channel portion may be semicircular, or may be a pipe running along the wall surface. However, the configuration thereof is not limited.

Furthermore, the discharge device 7 of the present embodiment is structured such that one end thereof opens onto the bottom portion of the casing 2, and at the other end is provided a discharge pipe 7B that is connected to the suction pump 7A, which is provided outside the casing 2. Here, the discharge pipe 7B extends from the suction pump 7A side directly above the casing 2 of the filtration apparatus 1, and passes into the casing 2 in the height direction from the aperture portion in the top of the casing 2 so that one end of the discharge pipe 7B opens towards the bottom portion of the casing 2. Moreover, this one end of the discharge pipe 7B is provided so as to open facing downwards to the vicinity of the bottom end of the bottom portion of the casing 2, which protrudes downwards in the shape of a truncated pyramid, as is described above.

Note that, in the present embodiment, the membrane filtration water pipes 3A of the filtration modules 3 and the air pipes 4B of the diffusion device (i.e., of the stirring device 4 and the cleaning device) also pass into the casing 2 from the aperture portion in the top thereof, in the same way as the discharge pipe 5B, and are connected to the headers of the filtration modules 3 and the diffusion apparatus 4A. Moreover, it is also possible to provide ultraviolet lamps inside the casing 2 such that they face the filtration modules 3. For example, a plurality of these ultraviolet lamps, which are formed by fluorescent tubes that have undergone waterproofing, may be placed in gaps between the filtration modules 3 and the inner wall surfaces of the casing 2 or the downpipes 6A, or else between adjacent downpipes 6A. The ultraviolet lamps 6A are placed such that the longitudinal directions thereof extend in parallel with the height direction of the casing 2. The ultraviolet lamps 6A are also supported such that they extend over substantially the entire length of the height direction of the filtration modules 3, and such that they are placed at substantially equal intervals in the circumferential direction of the casing 2. The ultraviolet lamps 6A are connected to a power supply and, when turned on, they are able to irradiate ultraviolet light onto the filtration modules 3.

Next, an embodiment of the filtration apparatus of the present invention in which the above described type of filtration unit 1 has been placed in the water storage tank 11 will be described based on FIG 5. In addition, in conformity with this, an embodiment of a method of placing a filtration unit of the present invention when the above described filtration unit 1 is placed in the water storage tank 11 will be described. The water storage tank 11 in the filtration apparatus of the present embodiment is the aforementioned precipitation tank provided, for example, in an existing water purification plant. The water storage tank 11 is formed as an oblong rectangle, as seen in plan view, whose longitudinal direction extends left to right in FIG 5. The water storage tank 11 is formed by a precipitation tank body 12 shaped like a rectangular pool that is hollowed out in a downward direction, and an overflow trough tank 13 that is placed adjacent to one end side (the right side in FIG. 5) in the longitudinal direction of the precipitation tank body 12. In FIG 5, filtration units 1 are placed in both the precipitation tank body 12 and the overflow trough tank 13, however, it is also possible for a filtration tank 1 to be placed in only one of the precipitation tank body 12 and the overflow trough tank 13.

An agglutination agent mixing tank (not shown) and a flocculation tank 14 to which is supplied the raw water W that is introduced into the precipitation tank body 12 are provided so as to be adjacent, via a wall portion 12A, to the other end side in the longitudinal direction of the precipitation tank body 12, which is the opposite side to the side where the overflow trough tank 13 is positioned (i.e., at the left side in FIG. 5). Agglutination agent is able to be supplied to the agglutination agent mixing tank and this tank is provided with a mixer. Raw water W that is supplied to the agglutination agent mixing tank is stirred at high speed so as to be mixed with the agglutination agent, and is then supplied to the flocculation tank 14. Furthermore, a flocculator (not shown) is rotatably provided inside this flocculation tank 14, and raw water W that is mixed with agglutination agent in this agglutination agent mixing tank and is then supplied to the flocculation tank 14 is gently stirred by the flocculator such that easily precipitated flocs are sufficiently formed. The raw water W is then introduced from the wall portion 12A on the other end side of the precipitation tank body 12.

Here, a large number of introduction holes 12B are provided in a vertically and horizontally aligned lattice configuration or zigzag configuration in the wall portion 12A located on the other end side in the longitudinal direction of the precipitation tank body 12 and between the precipitation tank body 12 and the flocculation tank 14, so as to form a flow regulating wall. Raw water W that is supplied to the flocculation tank 14 is introduced into the precipitation tank body 12 through these introduction holes 12B. Note that the water level of the raw water W that is supplied from the agglutination agent mixing tank to the precipitation tank body 12 via the flocculation tank 14 is higher than the highest introduction holes 12B from among the plurality of provided introduction holes 12B. In a state in which raw water W is held in the precipitation tank body 12, the raw water can be supplied without overflowing from the flocculation tank 14 to the precipitation tank body 12 from the other end side in the longitudinal direction of the precipitation tank body 12. Furthermore, the lowest introduction holes 12B from among the introduction holes 12B are formed at a sufficiently higher position than the bottom portion 12C of the precipitation tank body 12.

The precipitation tank body 12 is formed with a rectangular outline whose top is open and whose long sides run in the aforementioned longitudinal direction, as is shown in FIG. 5, even when seen in a side surface view. However, a slightly lower portion is formed in the other end side of the bottom portion 12C of the precipitation tank body 12 so as to form a sludge pit 15. A sludge pipe (not shown) that discharges sludge M via a sludge valve (not shown) is connected to the sludge pit 15.

Furthermore, a sludge scraping device 16 is provided in the bottom portion 12C of the precipitation tank body 12. This sludge scraping device 16 is capable of moving in a movement direction F when a direction along an aforementioned rectangular side of the precipitation tank body 12 as seen in plan view, and, in particular, in the present embodiment, when a direction of the long sides of the rectangle (i.e., the aforementioned longitudinal direction, namely, the left-right direction seen in FIG. 5) is taken as the movement direction F.

Here, in the present embodiment, rails 16A are provided on the bottom portion 12C of the precipitation tank body 12 in parallel with the movement direction F along a pair of long sides of the rectangle formed by the precipitation tank body 12 as seen in plan view. A submerged wagon 17 is provided so as to be able to move in the movement direction F along the rails 16A, and forms the sludge scraping device 16 of the present embodiment. The submerged wagon 17 is provided with wheels 17A at both side portions thereof. These wheels 17A are also provided at both end portions in the longitudinal direction of the submerged wagon 17 and allow the submerged wagon 17 to be mounted on the rails 16A. In addition, a scraper 17B that extends in a transverse direction of the precipitation tank body 12 is attached to a bottom portion of the submerged wagon 17 so as not to interfere with the rails 16A.

On the other hand, as is shown in FIG. 5, a wire rope 16B is suspended extending over the longitudinal direction of the precipitation tank body 12 (i.e., the movement direction F) directly above the path traveled by the submerged wagon 17, and is connected to the submerged wagon 17. Moreover, the wire rope 16B is wound around pulleys 16C that are mounted at both ends in the longitudinal direction of the bottom portion 12C of the precipitation tank body 12. The wire rope 16B is trained around a rope winding device (not shown) that is provided above the slab on the other end side of the precipitation tank body 12. By driving the wire rope 16B by winding it using the rope winding device, the wire rope 16B that is suspended in the longitudinal direction of the bottom portion 12C of the precipitation tank body 12 is made to advance in the movement direction F. Simultaneously with this, the submerged wagon 17 can be moved backwards and forwards along the movement direction F.

Note that, in the present embodiment, a plurality of sets of the sludge scraping devices 16 and submerged wagons 17 are provided on the bottom portion 12C of the precipitation tank body 12 so as to divide the short sides of the rectangle formed by the precipitation tank body 12 as seen in plan view into equal portions. In addition, a plurality of sets of the rope winding devices are provided above the aforementioned slab so as to be able to wind each of the wire ropes 16B of these sludge scraping devices 16. In contrast to this, it is also possible for a drive unit that drives a winding device to be provided for each rope winding device so that each submerged wagon 17 can be moved individually. Alternatively, it is also possible for a plurality of sets (for example, two sets) of rope winding devices to be driven by one drive unit, and when one submerged wagon 17 moves in one direction of a reciprocal movement along the movement direction F, another submerged wagon 17 is moved in the other direction of the reciprocal movement. Furthermore, in the present embodiment, as is described above, the submerged wagons 17 are able to move in the direction of the long sides of the precipitation tank body 12 which is formed as an oblong rectangle as seen in plan view, however, if, for example, the length of the short sides of the rectangle formed by the precipitation tank body 12 as seen in plan view is long, then it is possible to lay a plurality of pairs of rails 16A in this short side direction, and for a plurality of submerged wagons 17 to be provided, and for the sludge scraping device 16 to be provided with the direction of the short side to be taken as the movement direction F.

Furthermore, the submerged wagon 17 is connected to the wire rope 16B such that the scraper 17B moves in synchronization with the reciprocal movement that accompanies the advance of the wire rope 16 along the movement direction F. Namely, when the portion of the wire rope 16B that is connected to the submerged wagon 17 moves forward to the other end side in the longitudinal direction of the precipitation tank body 12 in the movement direction F, and in accompaniment to this, the submerged wagon 17 moves in one direction of a reciprocal movement towards the sludge pit 15 side at the other end in the longitudinal direction of the movement direction F, the scraper 17B is lowered downwards from the submerged wagon 17 so as to be placed in sliding contact with or close to the bottom portion 12C of the precipitation tank body 12. Sludge M that has accumulated on the bottom portion 12C is scraped by movement of the submerged wagon 17 in the aforementioned one direction so as to fall in the sludge pit 15. Conversely to this, when the portion of the wire rope 16B that is connected with the submerged wagon 17 moves back to the one end side in the longitudinal direction and the submerged wagon 17 moves in the other direction of the reciprocal movement, which is opposite to the aforementioned one direction of the movement direction F, the scraper 17B is pulled back from the bottom portion 12C of the precipitation tank body 12 so that the accumulated sludge M is not lifted up.

Furthermore, a plurality of inclined plates 18 that are inclined relative to a horizontal surface are stacked with a gap between each at an upper portion in the precipitation tank body 12 where the sludge scraping device 16 is provided in this manner. These inclined plates 18 accelerate the precipitation of floc, and inclined plates may also be used. If the precipitation tank has a sufficient length in the flow direction thereof, and a sufficient precipitation time can be obtained, then it is not necessary for the inclined plates 18 to be installed.

On the other hand, the overflow trough tank 13 has a smaller width in the longitudinal direction than the precipitation tank body 12, and the tank depth thereof is also shallower than that of the precipitation tank body 12. As seen in plan view, the overflow trough tank 13 is formed as a rectangle that extends along a short side at the aforementioned one end side of the rectangle formed by the precipitation tank body 12, and is adjacent to the precipitation tank body 12 via a wall portion 12D at one end side in the longitudinal direction of the precipitation tank body 12. Furthermore, a large number of introduction holes 12E are provided in a vertically and horizontally aligned lattice configuration or zigzag configuration in the wall portion 12D at this one end side as well, in the same way as in the wall portion 12A located at the other end side. Comparatively clear raw water W that has been introduced from the flocculation tank 14 into the precipitation tank body 12 of the water storage tank 11, and from which the majority of sludge M has been precipitated out in the manner described above is introduced into the overflow trough tank 13 through these introduction holes 12E. Note that, a gap is provided between the inclined plates 18 and the wall portion 12D in the precipitation tank body 12. An overflow trough (not shown) is provided in the overflow trough tank 13, and the supernatant water at the top of the inflowing water is drained out by the overflow trough.

In the present embodiment, a plurality of the above described filtration units 1 having the same shape and size and the same structure are placed, as is described above, with the bottom portion of the casing 2 facing downwards and the height direction thereof aligned in a perpendicular vertical direction, inside the overflow trough tank 13, which has a rectangular configuration as seen in plan view, and also between the inclined plates 18 and the wall portion 12D of the precipitation tank body 12. In the same way, the casings 2, which have a rectangular configuration when seen in plan view, are placed in a row in the longitudinal direction, as is shown in FIG 5, such that the sides of the rectangles are parallel with each other, and such that gaps are provided between the precipitation tank body 12 including the wall portion 12D and the internal wall portion of the overflow trough tank 13. In addition, if necessary, the filtration units 1 may be housed in a row running in the direction in which the overflow trough tank 13 extends (i.e., a direction perpendicular to the surface of the paper showing FIG. 5). The filtration units 1 are placed such that they are submerged in the raw water W that has been introduced into the precipitation tank body 12 and the overflow trough tank 13.

Accordingly, as seen in plan view, these filtration units 1 are placed on the opposite side from the wall portion 12A side at the other end side of the precipitation tank body 12, which is where raw water W is introduced into the water storage tank 11 of the filtration apparatus. As seen in plan view, the inclined plates 18 of the precipitation tank body 12 are positioned between the wall portion 12A at the other end side where the raw water W is introduced into the water storage tank 11 and the filtration units 11. Note that when the filtration units are being placed in the overflow trough tank 13 the overflow trough is removed.

The filtration units 1 may be supported at the same height as each other in the vertical direction with a gap provided between themselves and the bottom portion 12C of the precipitation tank body 12 and also between themselves and the bottom portion 13A of the overflow trough tank 13, for example, by suspending the casings 2 and partition plates 2C thereof using a wire rope or the like from a frame that extends across the top of the precipitation tank body 12 and the overflow trough tank 13, or by mounting the casings 2 and partition plates 2C thereof directly on a frame such as an angle member that is placed inside the precipitation tank body 12 and the overflow trough tank 13. Note that it is also possible for one of the casing 2 and the partition plate 2C to be supported by a wire rope or frame in this manner, and for the other one of the casing 2 and partition plate 2C to be supported via the first one. Furthermore, the filtration modules 3 and cleaning device 4 that are housed inside the casing 2 are also supported by being suspended using a wire rope or the like from the aforementioned frame that is extended across the precipitation tank body 12 or the overflow tank body 13, or by being mounted directly on a bracket or the like that is installed inside the casing 2.

Here, top portions of the casings 2 of the filtration units 1 that are supported in the aforementioned manner are positioned such that the top edges of the casings 2 and the partition plates 2C are positioned above the water level of the raw water W that is introduced as is described above into the precipitation tank body 12 and overflow trough tank 13, namely, are positioned above the water surface portion H, as is shown in FIGS. 6 to 14, and such that the bottom edges of the partition plates 2C are positioned below the water surface portion H. In contrast, the introduction apertures 2A of the casings 2 are placed such that the bottom edges thereof are positioned below the water surface portion H and are able to be open to the water surface portion H. In particular, in the present embodiment, as was shown in FIG. 3, they are open while being positioned at substantially the same height as the water surface portion H of the raw water W.

In a filtration apparatus in which filtration units 1 have been placed in the water storage tank 11 in this manner, the raw water W passes through the flocculation tank 14 from the agglutination agent mixing tank, as is described above, and is introduced into the precipitation tank body 12 of the filtration apparatus through the introduction holes 12B in the wall portion 12A at the other end side of the precipitation tank body 12. As the raw water W is traveling towards the one end side along the longitudinal direction of the rectangle formed by the precipitation tank body 12 as seen in plan view, the majority of flocs of sludge M and the like is precipitated and separated by the inclined plates 12, and accumulates on the bottom portion 12C, so that the raw water W becomes comparatively clear. Note that the sludge M that has accumulated on the bottom portion 12C in this way is scraped into the sludge pit 15 at the other end side in the longitudinal direction by the submerged wagon 17 of the sludge scraping device 16, and is discharged.

The raw water W that has been cleared in this way is then filtered by the filtration units 1 placed at the one end side of the precipitation tank body 12. In addition, raw water W that has been introduced into the overflow trough tank 13 through the introduction holes 12E formed in the wall portion 12D at the one end side is then further filtered by the filtration units 1 placed in the overflow trough tank 13. Namely, during the filtration operation task of the filtration units 1, firstly, as is shown in FIG. 6, the opening and closing valves serving as the control valves 2B are opened, and the introduction apertures 2A are opened. Because the introduction apertures 2A are able to be opened to the water surface portion H of the raw water W, the raw water W inside the water storage tank 11 is introduced into the casing 2 via the introduction apertures 2A.

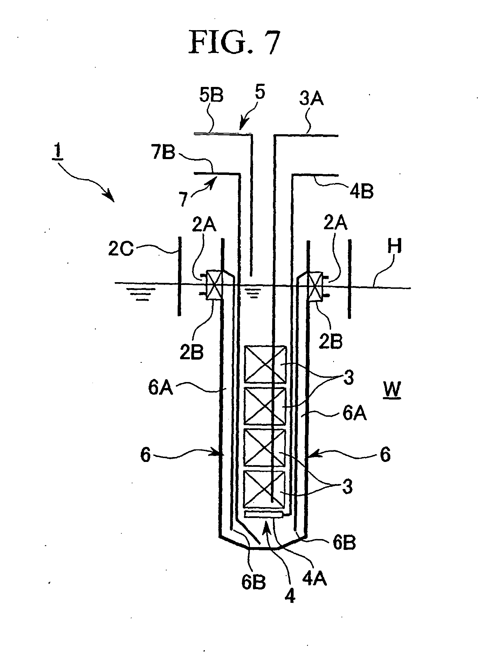

However, because the aperture portions of the introduction apertures 2A inside the casings 2 are covered by the downpipes 6a of the reverse flow inhibiting device 6, the raw water W that is introduced through the introduction apertures 2A passes through the interior of the downpipes 6A and flows into the interior of the casing 2, which is on the inner side of the downpipes 6A, through the bottom end aperture portions 6B of the downpipes 6A that are on the casing 2 bottom portion side, thereby filling up the interior of the casing 2. This introduction of the raw water W is ended when the level of the raw water W inside the casing 2 is equal to and balanced with the level of the water surface portion H of the raw water W in the water storage tank 11, as is shown in FIG. 7.

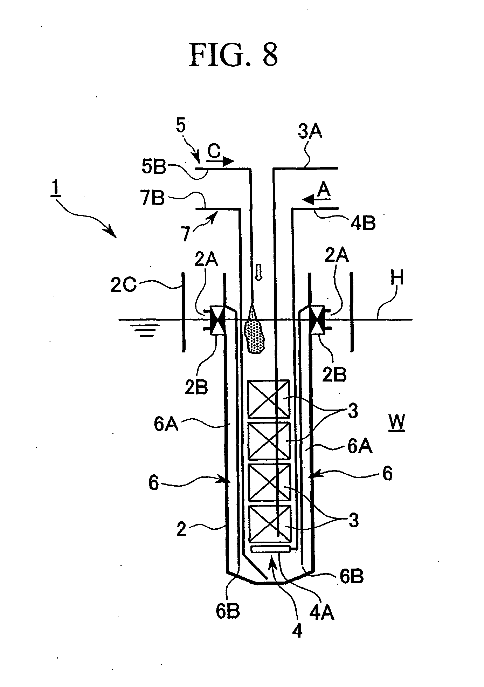

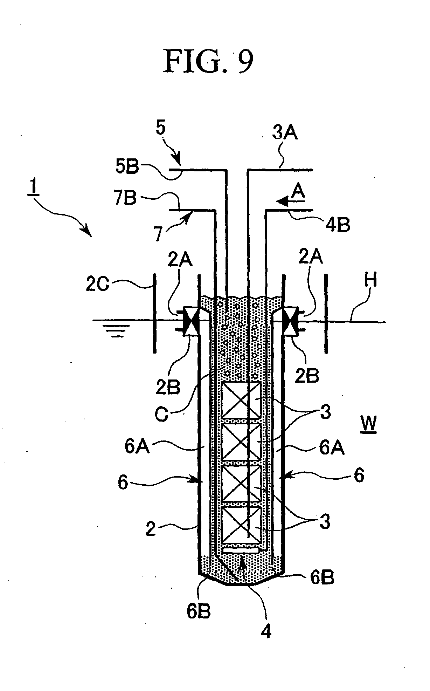

Next, activated carbon C (a suspension solution of activated carbon C in the present embodiment) is supplied by the activated carbon supply device 5, as is shown in FIG 8, to the raw water W that has been introduced into the casing 2. Note that, as this time, the introduction aperture 2A is closed by the control device 2B thereof, and is controlled such that the circulation of raw water through the interior and exterior of the casing 2 via the introduction aperture 2A is obstructed. Thereafter, as is shown in FIG. 9, using a diffusion device serving as the stirring device 4, air A serving as a fluid for stirring is ejected from the diffusion apparatus 4A and stirs the raw water W in the casing 2 to which the activated carbon C has been added. As a result, the activated carbon C is placed in a state of uniform dispersion in the raw water W. Note that the introduction aperture 2A at this time is still kept closed by the control device 2B.

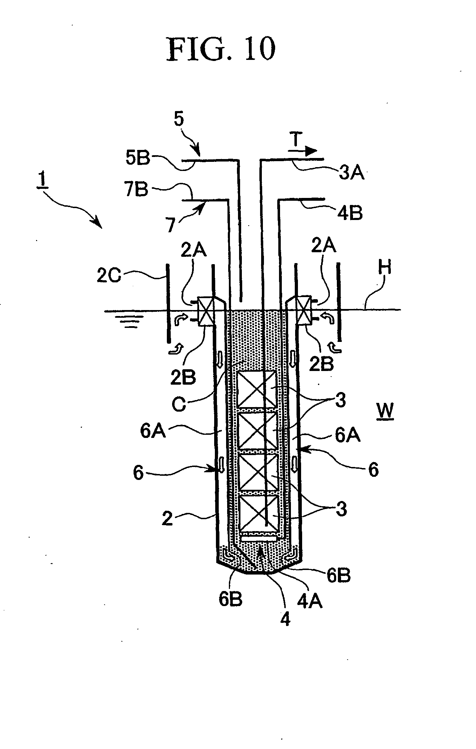

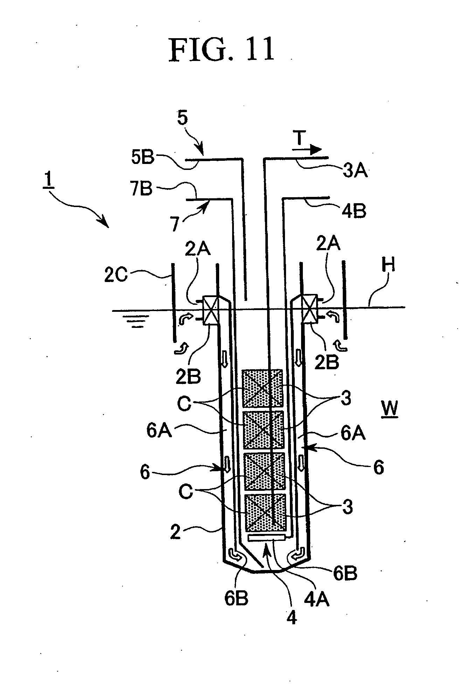

Once the raw water W in the casing 2 has been stirred in this way, the suction pump 3B that is connected to the filtration modules 3 is driven such that, as is shown in FIG. 10, the raw water W is filtered by the filtration modules 3. At this time, organic material and the like contaminating the raw water W is absorbed by the activated carbon C that has been added to the raw water W. Moreover, the activated carbon C itself is adhered to the surface of the hollow fiber membrane or the like constituting the filtration modules 3 by filtration based on absorption, as is shown in FIG 11, and forms a layer. When a layer of the activated carbon C is formed and then filtration is performed. Contaminants such as sludge or the like are filtered by this layer, and the load on the membrane is reduced. Sludge material that is small enough to pass through the activated carbon layer is filtered by the membrane, resulting in only clear raw water W being discharged and recovered as filtered water T.

Note that, during the filtration of the raw water W by the filtration modules 3, as is shown in FIGS. 10 and 11, by opening the introduction apertures 2A using the control device 2B, circulation of the raw water W through the introduction apertures 2A is allowed. Consequently, raw water W is filtered by the filtration modules 3 and filtered water T is discharged. As a result, the level of the raw water T inside the casing 2 moves to be lower than the water level of the raw water W in the water storage tank 11, and a pressure difference is generated between the raw water W inside the casing 2 and the raw water W outside the casing 2. Accordingly, as is shown by the arrow lines on the white background in the drawings, the raw water W flows from the introduction aperture 2A inside the casing 2, resulting in a continuous filtration operation being performed on the raw water W.

Moreover, if continuous filtration is performed in this manner, the surface of the activated carbon C layer on the surface of the filtration modules 3 ends up becoming covered by organic material and the like, and the filtration efficiency of newly introduced raw water W by the activated carbon C layer is deteriorated. In this case, once the introduction apertures have been temporarily closed by the control device 2B, stirring is performed by the stirring device 4. Namely, it is possible for the state shown in FIG 9 to be restored and the filtration operation to be performed by once again dispersing the activated carbon C, and repeating the steps shown in FIGS. 9 to 11. During this stirring, the absorption by the membrane of the suction pump 3B is stopped.

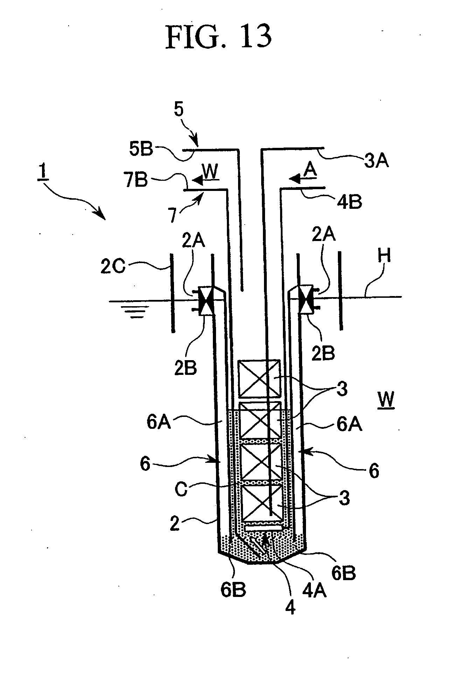

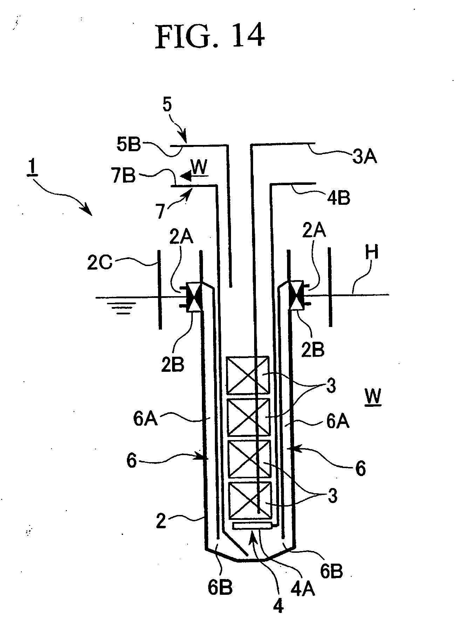

Furthermore, if the activated carbon absorption capability is exceeded by organic matter and contamination in the raw water W while this type of filtration operation is being performed, stirring is performed by the stirring device 4 provided in the filtration unit 1, the activated carbon is discharged, and new activated carbon is introduced. Namely, as is shown in FIG. 9, the absorption and discharge of the filtered water T by the suction pump 3B is stopped, the opening and closing valve of the control device 2B is closed, the circulation of raw water W via the introduction aperture 2A is shut off, air A is then diffused from the diffusion apparatus 4A of the diffusion device, and accretions of activated carbon C, sludge, and minute organic material that have adhered to the filtration modules 3 are peeled off by air scrubbing. These peeled off accretions together with the raw water W are discharged by the discharge device 7. The water level of the raw water W inside the casing 2 is then gradually lowered, as is shown in FIG 13, so that, finally, the water level is reduced to below the bottom end of the discharge pipe 7B, as is shown in FIG. 14, and the discharge is ended. Note that, it is possible for air scrubbing to be continuously performed while the raw water is being discharged. Subsequently, raw water and activated carbon are reintroduced, and operations are recommenced.

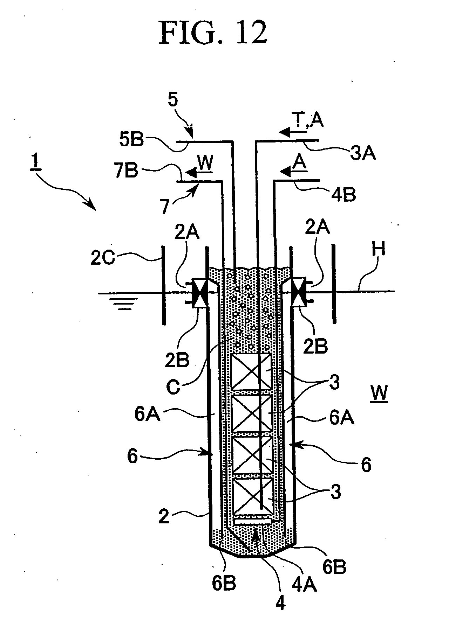

Furthermore, if the load is increased and the filtration efficiency is deteriorated as a result of minute contaminants in the raw water W becoming adhered to the surface of the hollow fiber membrane and the like of the filtration modules 3 while the above described type of filtration operation is being performed, the filtration modules 3 are cleaned by the cleaning device which doubles as the stirring device 4 that is provided in the filtration unit 1. Namely, as is shown in FIG. 12, the absorption and discharge of the filtered water T by the suction pump 3B is stopped, the opening and closing valve of the control device 2B is closed, the circulation of raw water W via the introduction aperture 2A is shut off, air A is then diffused from the diffusion apparatus 4A of the diffusion device, and accretions of activated carbon C, sludge, and minute organic material that have adhered to the filtration modules 3 are peeled off by air scrubbing. In addition, backwashing is performed by supplying air or filtered water using the filtration modules 3 through the membrane filtration water pipe 3A. Because water inside the casing 2 is increased by the backwashing, when necessary, raw water W inside the casing 2 can be suctioned and discharged by the discharge device 7 such that water does not overflow from the casing 2.

Backwashing is stopped after the accretions have been peeled off by the filtration modules 3 being cleaned by the cleaning device. These peeled off accretions together with the raw water W are discharged by the discharge device 7. The water level of the raw water W inside the casing 2 is then gradually lowered, as is shown in FIG. 13, so that, finally, the water level is reduced to below the bottom end of the discharge pipe 7B, as is shown in FIG. 14, and the discharge is ended. Note that, it is possible for air scrubbing to be continuously performed while the raw water is being discharged. Subsequently, raw water and activated carbon are reintroduced, and operations are recommenced.

The discharged raw water W is sent to a discharge water processing plant, however, in some cases, it may be supplied to the agglutination agent mixing tank on the opposite side from the filtration unit 1 in the water storage tank 11, and solid material therein may be once again precipitated out as flocs.

However, according to the filtration unit 1 having the above described structure, because the casings 2 are immersed in the actual precipitation tank body 12 and the overflow trough tank 13 themselves that form the water storage tank 11 of the precipitation tank and the like in a water purification plant, and the relevant filtration units 1 are installed, as is described above, the space required does not exceed that occupied by the water storage tank 11, and is possible to achieve a reduction in the space that is occupied. In addition, because the filtration modules 3 and the stirring device (i.e., the cleaning device) 4 are housed in the casing 2, which is formed as a cylinder with a closed off bottom, then even if, for example, a diffusion device is employed as the stirring device (i.e., the cleaning device) 4, as in the present embodiment, and the stirring and cleaning are performed by the diffusion of air A, raw water W that is held inside the water storage tank 11 but outside the casing 2 is not stirred. Accordingly, is possible to prevent sludge that has accumulated on the bottom portions 12C and 13A of the water storage tank 11 from being stirred up. As a result, sludge and the like that has been stirred up in this way after the stirring and after the cleaning is not taken into the casing 2 together with the raw water W, and a filtration operation can be performed rapidly. Accordingly, a remarkable improvement in work efficiency can be achieved.

Moreover, because the activated carbon supply device 5 is provided in the filtration unit 1 and activated carbon C is added to the raw water W that is introduced into the casing 2, as is described above, not only is organic matter in the raw water W absorbed by the activated carbon C, but as a result of the activated carbon C itself forming a layer on the surface of the filtration modules 3, sludge and the like can be separated out. Consequently, because only minute contaminants are separated out by the hollow fiber membrane and the like of the filtration modules 3, efficient filtration can be achieved. Moreover, in the above described placement method and filtration apparatus, because a structure is employed in which the filtration units 1 are placed inside the water storage tank 11 of the precipitation tank and the like, the casing 2 of each filtration unit 1 is small. In addition, as is described above, because comparatively clear raw water W is introduced into the casing 2 compared with when activated carbon is added to the tank itself (i.e., the water storage tank 11 in the present embodiment) into which the raw water W is introduced, as is the case in Patent Documents 2 and 5, only a remarkably small quantity of activated carbon C needs to be added, and there is little sludge in the raw water W that is discharged by the discharge device 7. Therefore, as is described above, this raw water W can be circulated back to a stage prior to the filtration units 1 and the activated carbon C can be reused. Accordingly, economically, it is possible to achieve a reduction in filtration costs.

In the above described filtration units 1 there is provided a reverse flow inhibiting device 6 that inhibits raw water W that has been introduced into a casing 2 from flowing back into the introduction apertures 2A and being discharged into the water storage tank 11. Accordingly, when the introduction apertures 2A are opened and the raw water W inside the water storage tank 11 is being continuously filtered by the filtration modules 3 as it is being introduced after the raw water W to which activated carbon C has been added has been stirred by the stirring device 4, it is possible to prevent a state from arising in which the raw water W inside the casings 2, which contains the activated carbon C, is discharged through the introduction apertures 2A into the water storage tank 11 thereby hampering the above described efficient filtration using the activated carbon C, or, a state in which, in order to supplement the discharged activated carbon C, it becomes necessary to replenish it with new activated carbon C from the activated carbon supply device 5, thereby causing a deterioration in the cost reduction effect. In other words, according to the filtration unit 1 having the above described structure, the method of placement thereof and the filtration apparatus, the effects of improving filtration efficiency and reducing costs by acting activated carbon C can be achieved even more reliably using this reverse flow inhibiting device 6.

Furthermore, in the present embodiment, because the downpipe 6 that extends from the introduction apertures 2A towards the bottom of the casing 2, and whose bottom end aperture portion 6B is positioned below the diffusion apparatus 4A of the stirring device 4 is used as the reverse flow inhibiting device 6, while the raw water W is mainly stirred above the stirring device 4, it is possible to more reliably prevent the raw water from flowing back towards the introduction apertures 2A. Note that, as the downpipe 6A, a tubular member such as a normal pipe may be provided extending downwards from the aperture portions of the introduction apertures 2A that are on the inner side of the casing 2 and opening below the stirring device 4, however, as in the present embodiment, by bonding a bar having a concave shaped cross section that has one side opened up to the interior wall of the casing 2, so that the downpipe 6A is formed together with the casing 2 in a pipe shape, it is possible to prevent the formation of dead spaces where the stirring effect of the stirring action is not sufficiently manifested between the internal wall of the casing 2 and the pipe shaped member when this is provided. In addition, the advantage is obtained that it is possible to ensure a larger portion of the space inside the casing 2 that can be used for filtration.

Moreover, in the present embodiment, because a diffusion device that stirs the raw water W by diffusing it by injecting air A into it from the diffusion apparatus 4 is used as the stirring device 4, and this diffusion device can also be used as a cleaning device for cleaning the filtration modules 3 by peeling off accretions and the like that have adhered to the filtration modules 3 by air scrubbing, a greater degree of efficiency is obtained. However, it is also possible to employ a structure in which the stirring device 4 does not double as a cleaning device and in which, for example, added activated carbon C is diffused by the raw water W being stirred by a stirring propeller that is rotated by the stirring device. Alternatively, it is possible to employ a structure in which, for example, pipes with holes punched therein or sintered pipes are provided in the casing 2, in the same way as the diffusion pipes, above the bottom end aperture portions 6B of the downpipes 6A and also to the side of the filtration modules 3, and for raw water W or purified water to be supplied under pressure to these pipes, thereby stirring the raw water W inside the casing 2 and cleaning the filtration modules 3 using water jet currents.

Furthermore, in the above described embodiment, the circulation of the raw water W through the introduction apertures 2A of the casing 2 is able to be controlled by the control device 2B. Accordingly, even if the raw water W inside the casing 2 to which the active carbon C has been added flows back by chance during stirring in spite of the reverse flow inhibiting device 6 towards the introduction apertures 2A, this raw water W can be prevented from being discharged into the water storage tank 11. Moreover, by also shutting the introduction apertures 2A by closing the opening and closing valves of the control device 2B during the cleaning of the filtration modules 3, it is possible to keep the raw water W inside the casings 2 in a state of complete isolation from the raw water W inside the water storage tank 11 that is outside the casings 2. Therefore, as is shown in FIG. 12, even if the water level of the raw water W inside the casings 2 is raised by the air scrubbing performed by the diffusion device, it is possible to avoid a situation in which accretions that have been peeled off from the filtration modules 3 by the cleaning are discharged from the introduction apertures 2A into the water storage tank 11, and are then introduced again into the casings 2 through the introduction apertures 2A when filtration operations are recommenced, and once again become adhered to the filtration modules 3. Therefore, according to the present embodiment, it is possible to prevent any deterioration in the filtration efficiency after cleaning that is caused by the re-adhesion of accretions that have been peeled off. This enables filtration operations the be recommenced after cleaning extremely quickly, and enables more efficient filtration of the raw water W to be achieved.

Moreover, because the partition plate 2C is provided around the circumference of the introduction apertures 2A in the casings 2, when the raw water W inside the water storage tank 11 is introduced from the opened introduction apertures 2A into the casing 2, the introduction of the raw water W of the water surface portion H where the introduction apertures 2A are opened is restricted. Namely, by placing the partition plate 2C so as to surround the outer circumference of the casing 2 at substantially the same height as the introduction apertures 2A, the raw water W of the water surface portion H on the outside of the partition plate 2C does not simply flow into the introduction apertures 2A, and as is shown by the arrow lines on a white background in FIGS. 6, 10, and 11, only the raw water W that is below the water surface portion H is introduced into the casings 2 through the introduction apertures 2A between the partition late 2C and the casings 2. Therefore, even if dust and dirt is floating on the water surface H of the raw water W that is held in the water storage tank 11, the filtration efficiency is not obstructed by this dust and dirt entering into the interior of the casings 2 and adhering to the surface of the filtration module 3, thereby enabling more efficient filtering to be performed.

On the other hand, activated carbon C that has absorbed sludge and organic material in the raw water W that has been introduced into the casings 2, or the accretions that have been peeled off from the filtration modules 3 by cleaning are precipitated out to the bottom portions of the casings 2, however, in the filtration unit 1 of the present embodiment, because one end of the discharge pipe 7B that is connected to the suction pump 7A as a discharge device 7 is open at the bottom portion of the casings 2, it is possible to rapidly absorb and discharge accretions and the like that have been precipitated out to the bottom portion of the casings 2 together with the raw water W inside the casings 2. Consequently, according to the present embodiment, it is possible to prevent accretions that have precipitated in this manner from being left remaining in a state of accumulation on the bottom portions inside the casings 2 and becoming stirred up inside the casings 2 by raw water W that is introduced after the cleaning process. As a result, more efficient filtration can be achieved, and it is possible to quickly recommence filtration operations after cleaning. In addition, in the present embodiment, while the bottom portion of the casing 2 is formed, as is described above, with a tapered configuration that bulges downwards, and the precipitated accretions and the like are made to collect in the bottom end thereof by the configuration of the bottom portion, because one end of the discharge pipe 7B opens in the vicinity of the bottom end of this bottom portion, it is possible to discharge precipitated accretions more efficiently and rapidly.

Furthermore, in the present embodiment, this discharge pipe 7B is provided so as to pass from the top aperture portion of the casing 2 through the interior of the casing 2, and such that one end thereof opens at the bottom portion of the casing 2, and the portion that is immersed in the raw water W inside the water storage tank 11 is not placed on the outside of the casing 2. Accordingly, it becomes possible to prevent situations such as it becoming necessary to secure a larger space than is required between the discharge pipe 7B and the wall portion in order to avoid interference from the discharge pipe 7B with the wall portion of the water storage tank 11 as is the case when the discharge pipe 7B is placed outside the casing 2, or, when a plurality of filtration units 1 are placed in the water storage tank 11, as in the present embodiment, it becoming necessary to secure a larger space than is required between filtration units 1 in order to avoid interference between the discharge pipes 7B of each filtration unit 1. Consequently, it becomes possible to reliably place a sufficient number of and sufficiently sized filtration units 1 in a water storage tank 11 whose size is limited.

Moreover, as a result of the discharge pipe 7B being placed so as to pass through the interior of the casing 2 in this way, it becomes no longer necessary to form insertion holes for the discharge pipes 7B in the wall portion of the casing 2, as would be the case if, for example, the discharge pipe 7B were inserted from the outside of the casing 2 into the interior of the casing 2, or to insert the discharge pipe 7B in these holes such that they are mounted in a watertight manner, and the design and construction of the filtration units 1 is simplified. Moreover, in the present embodiment, because the membrane filtration water pipes 3A of the filtration modules 3 and the air pipes 4B of the diffusion device of the combined stirring device 4 and cleaning device are provided in the same way so as to pass from the top aperture portion of the casings 2 through the interior of the casings 2, it becomes possible to achieve even more reliable placement of the filtration units 1 and even simpler design and construction.

Furthermore, in the present embodiment, because the suction pump 3B is connected via the membrane filtration water pipes 3A to the filtration modules 3, and filtered water T that has been filtered from the raw water W by the filtration modules 3 is forcibly absorbed and discharged by the suction pump 3B, more reliable and efficient filtration can be performed. However, provided that the absorption of sufficient filtered water T is possible, then there is no problem with discharging the filtered water using another method, for example, a gravity method or siphoning method.

Moreover, if an ultraviolet lamp is provided inside the casing 2 so as to face the filtration modules 3, as is described above, even if microorganisms in the raw water W that has been introduced into the casings 2 adhere to the surface of the filtration modules 3, these can be eliminated by sterilization using the ultraviolet rays irradiated from the ultraviolet lamp 6. It also becomes possible to prevent a state from arising in which slime is generated when such microorganisms adhering to the surface of the filtration module 3 reproduce, so that it becomes difficult to peel off accretions on the surface of the filtration modules 3 even by cleaning using the cleaning device. This enables a high filtration efficiency to be maintained over an extended period. Moreover, by sterilizing and eliminating microorganisms using an ultraviolet lamp in this way, no chemicals are left in the filtered water T, for example, as is the case when chemicals are added to the raw water W, and it is possible to curtail the cost and time required by the processing of such remaining chemicals.

On the other hand, in a filtration apparatus in which the above described type of filtration units 1 have been placed in a water storage tank 11, because it is possible to achieve a curtailment in costs and an improvement in the filtration efficiency in the filtration units 1, as is described above, the filtration apparatus itself is also able to achieve efficient and economical filtration of the raw water W. Furthermore, according to the above described type of filtration apparatus and the method of installing the filtration units 1 in order to construct the filtration apparatus, because the development of the filtration units 1 into units is highly advanced, for example, they can be applied easily, in a short period of time, and at low cost even in a water storage tank 11 such as the final precipitation pond of an existing water purification plant without large scale reconstruction being needed. It is even possible for the filtration units 1 to be installed while the operation of the water purification plant is being performed.

Moreover, according to the method of installing the filtration units 1 of the present embodiment and to the filtration apparatus of the present embodiment in which filtration units 1 have been installed using this installation method, because the filtration units 1 are installed on the opposite side, as seen in plan view, from the side where the raw water W is introduced into the water storage tank 11, the majority of the sludge and the like that is introduced into the water storage tank 11 is precipitated out and comparatively clear raw water W can be introduced into the interior of the casing 2 of the filtration unit 1 and filtered. Accordingly, it is possible to achieve a lightening of the load on the filtration modules 3 of the filtration units 1, and to maintain a high level of filtration efficiency over an extended period of time.

However, if, for example, the sludge pit 15 is provided at a long side of the precipitation tank body 12, which is shaped as a rectangle when seen in plan view, then it is also possible for the submerged wagon 17 of the sludge scraping device 16 to be able to move with the direction of movement F being the direction of the short sides of the rectangle. Moreover, in the above described embodiment, a description is given of when the filtration units 1 are installed in a water storage tank 11 (i.e., including the precipitation tank body 12 and the overflow trough tank 13) that is formed as a rectangle when seen in plan view, however, the filtration units 1 of the above described embodiment can also be applied, for example, to water storage tanks and the like such as circular cylinder shaped filtration tanks that have a circular cross section when seen in plan view, as is the case in the aforementioned Patent Document 1. In this case, in the same way as in the filtration apparatus of Patent Document 1, the circular cylinder shaped water storage tank or the like is divided into a central columnar shaped area and a donut shaped area at the outer circumference thereof. If raw water W is introduced into the columnar shaped area, the filtration units 1 may be installed on the opposite side from the side where the raw water W is introduced, namely, in the donut shaped area on the outer circumferential side of the water storage tank or the like.

Note that, in the present embodiment, the introduction apertures 2A are pipe shaped members that penetrate upper wall surfaces of the casings 2, and the control devices 2B are opening and closing valves that are provided in these pipe shaped members, however, it is also possible, for example, for the introduction apertures 2A to be simple window frame shaped aperture portions that are formed in the upper wall surfaces of the casings 2. In addition, the control devices 2B may be doors that are shaped as flat plates or the like that open and close the aperture portions. Moreover, it is also possible to employ a structure in which no aperture portions are formed in the wall surfaces of the casings 2, and the casings 2 are immersed such that the rectangular cylinder shaped aperture portion itself at the top of the casing 2 is open at the water surface portion H of the raw water W, or more specifically, the rectangular cylinder shaped aperture portion itself at the top of the casing 2 is positioned slightly below the water surface of the raw water W. As a result, this aperture portion itself at the top of the casing 2 forms the introduction aperture 2A. In addition, the control devices 2B can be formed by providing a rectangular plate shaped cutoff wall or the like, which can be moved up and down by a driving device and whose circumferential dimension is slightly larger than that of the casing 2, at the outer circumference at a top portion of the casing 2. By moving this cutoff wall up and down, the introduction of raw water W through the aperture portion in the top of the casing 2 can be controlled.

While preferred embodiments of the invention have been described and illustrated above, it should be understood that these are exemplary of the invention and are not to be considered as limiting. Accordingly, the invention is not to be considered as limited by the foregoing description and is only limited by the scope of the appended claims.

## Claims

1. A filtration unit (1), comprising:
a casing (2) for immersion in a water storage tank or a water storage pond into which raw water is introduced, wherein the casing (2) has a bottom and is shaped like a cylinder and the casing (2) is provided with:
an introduction aperture (2A) for introducing raw water from the water storage tank or the water storage pond into the casing (2);
an activated carbon supply device (5) for adding activated carbon into the introduced raw water;
a stirring device (4) for stirring raw water in the casing (2) to which activated carbon has been added;
a filtration module (3) for filtering raw water;
a reverse flow inhibiting device (6) for inhibiting the raw water inside the casing (2) from flowing back into the introduction aperture (2A) and being discharged into the water storage tank or the water storage pond; and
a discharge device (7) for discharging raw water inside the casing (2);
**characterised in that** an introduction aperture (2A) is provided so as to be able to open at a water surface portion of the raw water in the water storage tank or the water storage pond when the casing is immersed, and a partition plate (2C) for restricting an inflow of the raw water of the water surface portion is provided at least at a periphery of the introduction aperture (2A) at an external circumference of the casing (2).

2. The filtration unit (1) according to claim 1, wherein the reverse flow inhibiting device (6) is a downpipe (6A) that extends from the introduction aperture (2A) towards the bottom inside the casing (2), and a bottom end aperture portion (6B) of this downpipe (6A) is positioned below the stirring device (4).

3. The filtration unit (1) according to claim 1 or 2, wherein the stirring device (4) is a diffusion device for stirring the raw water inside the casing (2) by diffusing air into the casing (2), and wherein the stirring device (4) further functions as a cleaning device for cleaning the filtration module (3).

4. The filtration unit (1) according to any one of claims 1 to 3, wherein the filtration module (3) is provided with a membrane filtration water pipe (3A) for discharging filtered water that has been filtered from the raw water, the stirring device (4) is provided with a fluid supply pipe (4B) to which fluid for stirring the raw water inside the casing (2) is supplied, and the discharge device (7) is provided with a discharge pipe (7B) for discharging the raw water, and wherein at least one of the membrane filtration water pipe (3A), the fluid supply pipe (48), and the discharge pipe (7B) extends from a top portion of the casing (2) into the casing (2).

5. The filtration unit (1) according to any one of claims 1 to 4, wherein the discharge device (7) is provided with a discharge pipe (7B) that is connectable to a suction pump (7A), and this discharge pipe (7B) opens at a bottom portion inside the casing (2).

6. The filtration unit (1) according to any one of claims 1 to 5, wherein a control device (2B) is provided in the introduction aperture (2A) for controlling circulation of raw water via the introduction aperture (2A).

7. The filtration unit (1) according to any one of the claims 1 to 6, wherein the casing (2) is formed as a rectangular cylinder.

8. A method of installing a filtration unit (1) comprising the step of installing the filtration unit (1) according to any one of claims 1 to 7 in a water storage tank or a water storage pond.

9. The method of installing a filtration unit (1) according to claim 8, wherein the filtration unit (1) is installed on an opposite side, as seen in plan view, from a side on which the raw water of the water storage tank or the water storage pond is introduced.

10. A filtration system comprising:
a water storage tank or a water storage pond ; and
a filtration unit (1) according to any one of claims 1 to 7 installed in the water storage tank or the water storage pond.

11. The filtration system according to claim 10, wherein the filtration unit (1) is installed on an opposite side, as seen in plan view, from a side on which the raw water of the water storage tank or the water storage pond is introduced.

## Patentansprüche

1. Filtrationseinheit (1) mit:
einem Gehäuse (2) für das Eintauchen in einem Wasserspeichertank oder einem Wasserspeicherbecken, in welches Rohwasser eingeführt wird, wobei das Gehäuse (2) einen Boden hat und wie ein Zylinder geformt ist und versehen ist mit:
einer Einführöffnung (2A) für das Einführen von Rohwasser aus dem Wasserspeichertank oder dem Wasserspeicherbecken in das Gehäuse (2);
einer Zuführvorrichtung (5) für Aktivkohle für das Zugeben von Aktivkohle in das eingeführte Rohwasser;
einem Rührwerk (4) zum Rühren von Rohwasser in dem Gehäuse (2), welchem Aktivkohle zugegeben wurde;
einem Filtrationsmodul (3) für das Filtern des Rohwassers;
einer Umkehrströmungsunterdrückungsvorrichtung (6), um zu verhindern, daß das Rohwasser in dem Gehäuse (2) in die Einführöffnung (2A) zurückfließt und in den Wasserspeichertank oder das Wasserspeicherbecken abgeführt wird; und
einer Abführvorrichtung (7) zum Abführen von Rohwasser in dem Gehäuse (2);
**dadurch gekennzeichnet, daß** eine Einführöffnung (2A) vorgesehen ist, um in der Lage zu sein, sich an einem Wasseroberflächenabschnitt des Rohwassers in dem Wasserspeichertank oder dem Wasserspeicherbecken zu öffnen, wenn das Gehäuse eingetaucht wird, und eine Abtrennplatte (2C) für die Begrenzung eines Zuflusses des Rohwassers des Wasseroberflächenabschnittes mindestens an einem Umfang der Einführöffnung (2A) an einem Außenumfang des Gehäuses (2) vorgesehen ist.

2. Filtrationseinheit (1) nach Anspruch 1, wobei die Umkehrfließunterdrückungsvorrichtung (6) ein Fallrohr (6A) ist, welches sich aus der Einführöffnung (2A) zu dem Boden in dem Gehäuse (2) hin erstreckt, und ein Bodenendöffnungsabschnitt (6B) dieses Fallrohres (6A) unter dem Rührwerk (4) angeordnet ist.

3. Filtrationseinheit (1) nach Anspruch 1 oder 2, wobei das Rührwerk (4) eine Diffusionsvorrichtung für das Rühren des Rohwassers innerhalb des Gehäuses (2) durch Diffundieren von Luft in das Gehäuse (2) hinein hat und wobei das Rührwerk (4) ferner als Reinigungsvorrichtung für die Reinigung des Filtrationsmoduls (3) fungiert.

4. Filtrationseinheit (1) nach einem der Ansprüche 1 bis 3, wobei das Filtrationsmodul (3) mit einem Membranfiltrationswasserrohr (3A) versehen ist für das Abführen von gefiltertem Wasser, welches aus dem Rohwasser gefiltert wurde, das Rührwerk (4) mit einem Fluidzuführrohr (48) versehen ist, welchem Fluid zum Rühren des Rohwassers in dem Gehäuse (2) zugeführt wird, und die Abführvorrichtung (7) mit einem Abführrohr (7B) versehen ist für das Abführen von Rohwasser, wobei mindestens das Membranfiltrationswasserrohr (3A) oder das Fluidzuführrohr (4B) oder das Abführrohr (7B) sich von einem oberen Abschnitt des Gehäuses (2) in das Gehäuse (2) hinein erstreckt.

5. Filtrationseinheit (1) nach einem der Ansprüche 1 bis 4, wobei die Abführvorrichtung (7) mit einem Abführrohr (7B) versehen ist, das mit einer Saugpumpe (7A) verbindbar ist, und sich dieses Abführrohr (7B) an einem Bodenabschnitt innerhalb des Gehäuses (2) öffnet.

6. Filtrationseinheit (1) nach einem der Ansprüche 1 bis 5, wobei eine Steuervorrichtung (2B) in der Einführöffnung (2A) vorgesehen ist für die Steuerung des Umwälzens des Rohwassers über die Einführöffnung (2A).

7. Filtrationseinheit (1) nach einem der Ansprüche 1 bis 6, wobei das Gehäuse (2) als ein rechtwinkliger Zylinder gebildet ist.

8. Verfahren für die Montage einer Filtrationseinheit (1) mit dem Schritt des Montierens der Filtrationseinheit (1) gemäß einem der Ansprüche 1 bis 7 in einem Wasserspeichertank oder einem Wasserspeicherbecken.

9. Verfahren zum Montieren einer Filtrationseinheit (1) nach Anspruch 8, wobei die Filtrationseinheit (1) in Draufsicht gesehen auf einer gegenüberliegenden Seite von einer Seite montiert ist, auf der das Rohwasser des Wasserspeichertanks oder des Wasserspeicherbeckens eingeführt wird.

10. Filtrationssystem mit:
einem Wasserspeichertank oder einem Wasserspeicherbecken; und
einer Filtrationseinheit (1) nach einem der Ansprüche 1 bis 7, die in dem Wasserspeichertank oder dem Wasserspeicherbecken montiert ist.

11. Filtrationssystem nach Anspruch 10, wobei die Filtrationseinheit (1) in Draufsicht gesehen auf einer gegenüberliegenden Seite von einer Seite montiert ist, auf welcher das Rohwasser des Wasserspeichertanks oder des Wasserspeicherbeckens eingeführt wird.

## Revendications

1. Unité de filtration (1) comprenant :
un boîtier (2) pour une immersion dans une cuve de stockage d'eau ou un bac de stockage d'eau dans lequel l'eau brute est introduite, où le boîtier (2) comporte un fond et présente une forme de cylindre et le boîtier (2) est doté de :
une ouverture d'introduction (2A) destinée à introduire l'eau brute depuis la cuve de stockage d'eau ou le bac de stockage d'eau dans le boîtier (2),
un dispositif d'alimentation en charbon actif (5) destiné à ajouter du charbon actif dans l'eau brute introduite,
un dispositif d'agitation (4) destiné à agiter l'eau brute dans le boîtier (2) à laquelle le charbon actif a été ajouté,
un module de filtration (3) destiné à filtrer l'eau brute,
un dispositif d'empêchement d'écoulement inverse (6) destiné à empêcher l'eau brute à l'intérieur du boîtier (2) de refluer dans l'ouverture d'introduction (2A) et d'être évacuée dans le réservoir de stockage d'eau ou le bac de stockage d'eau, et
un dispositif d'évacuation (7) destiné à évacuer l'eau brute à l'intérieur du boîtier (2),
**caractérisée en ce qu'**une ouverture d'introduction (2A) est ménagée de façon à pouvoir s'ouvrir au niveau d'une partie de surface d'eau de l'eau brute dans la cuve de stockage d'eau ou le bac de stockage d'eau lorsque le boîtier est immergé, et une plaque de séparation (2C) destinée à limiter une entrée de l'eau brute de la partie de surface d'eau est prévue au moins à une périphérie de l'ouverture d'introduction (2A) au niveau d'une circonférence externe du boîtier (2).

2. Unité de filtration (1) selon la revendication 1, dans laquelle le dispositif empêchant un écoulement inverse (6) est un tuyau de descente (6A) qui s'étend depuis l'ouverture d'introduction (2A) vers le fond à l'intérieur du boîtier (2) et une partie d'ouverture d'extrémité de fond (6B) de ce tuyau de descente (6A) est positionnée en dessous du dispositif d'agitation (4).

3. Unité de filtration (1) selon la revendication 1 ou 2, dans laquelle le dispositif d'agitation (4) est un dispositif de diffusion destiné à agiter l'eau brute à l'intérieur du boîtier (2) en diffusant de l'air dans le boîtier (2), et dans laquelle le dispositif d'agitation (4) fonctionne en outre en tant que dispositif de nettoyage destiné à nettoyer le module de filtration (3).

4. Unité de filtration (1) selon l'une quelconque des revendications 1 à 3, dans laquelle le module de filtration (3) est doté d'une conduite d'eau de filtration par membrane (3A) destinée à évacuer l'eau filtrée qui a été filtrée à partir de l'eau brute, le dispositif d'agitation (4) est doté d'une conduite d'alimentation en fluide (4B) vers laquelle le fluide destiné à agiter l'eau brute à l'intérieur du boîtier (2) est fourni et le dispositif d'évacuation (7) est doté d'une conduite d'évacuation (7B) destinée à évacuer l'eau brute, et dans laquelle au moins une de la conduite d'eau de filtration par membrane (3A), de la conduite d'alimentation en fluide (4B) et de la conduite d'évacuation (7B) s'étend depuis une partie supérieure du boîtier (2) jusque dans le boîtier (2).

5. Unité de filtration (1) selon l'une quelconque des revendications 1 à 4, dans laquelle le dispositif d'évacuation (7) est doté d'une conduite d'évacuation (7B) qui peut être reliée à une pompe d'aspiration (7A) et cette conduite d'évacuation (7B) s'ouvre au niveau d'une partie de fond à l'intérieur du boîtier (2).

6. Unité de filtration (1) selon l'une quelconque des revendications 1 à 5, dans laquelle un dispositif de commande (2B) est prévu dans l'ouverture d'introduction (2A) en vue de commander la circulation de l'eau brute par l'intermédiaire de l'ouverture d'introduction (2A).

7. Unité de filtration (1) selon l'une quelconque des revendications 1 à 6, dans laquelle le boîtier (2) présente une forme de cylindre rectangulaire.

8. Procédé d'installation d'une unité de filtration (1) comprenant l'étape d'installation de l'unité de filtration (1) selon l'une quelconque des revendications 1 à 7 dans une cuve de stockage d'eau ou un bac de stockage d'eau.

9. Procédé d'installation d'une unité de filtration
(1) selon la revendication 8, dans lequel l'unité de filtration (1) est installée sur un côté opposé, comme observé dans une vue en plan, depuis un côté par lequel l'eau brute de la cuve de stockage d'eau ou du bac de stockage d'eau est introduite.

10. Système de filtration (1) comprenant :
une cuve de stockage d'eau ou un bac de stockage d'eau,
et une unité de filtration (1) selon l'une quelconque des revendications 1 à 7, installée dans la cuve de stockage d'eau ou le bac de stockage d'eau.

11. Système de filtration selon la revendication 10, dans lequel l'unité de filtration (1) est installée sur un côté opposé, comme observé dans une vue en plan, depuis un côté par lequel l'eau brute de la cuve de stockage d'eau ou du bac de stockage d'eau est introduite.
